# EUROPÄISCHE PATENTSCHRIFT

(11) **EP 1 105 328 B1**
(45) Veröffentlichungstag und Bekanntmachung des Hinweises auf die Patenterteilung: **15.09.2004**
(21) Anmeldenummer: 00927174.3
(22) Anmeldetag: 10.05.2000
(51) Int. Cl.: B65G 47/84, C23C 14/56

(54) **VORRICHTUNG ZUM EINBRINGEN UND/ODER AUSBRINGEN VON BEHÄLTERN**
DEVICE FOR INTRODUCING AND/OR ELIMINATING CONTAINERS
DISPOSITIF D'INTRODUCTION ET D'EVACUATION DE RECIPIENTS

(30) Priorität: 19.05.1999 DE 19922873
(43) Veröffentlichungstag der Anmeldung: 13.06.2001
(73) Patentinhaber: KRONES AG, 93068 Neutraubling (DE)
(72) Erfinder: HUMELE, Heinz, 93107 Thalmassing (DE)
(86) Internationale Anmeldenummer: PCT/EP2000/004155
(87) Internationale Veröffentlichungsnummer: WO 2000/071447

(56) Entgegenhaltungen:
- EP-A- 0 228 351
- WO-A-98/40531
- US-A- 1 766 018
- US-A- 5 558 200

## Beschreibung

Die Erfindung betrifft eine Vorrichtung gemäß dem Oberbegriff des Patentanspruchs 1.

Solche Vorrichtungen werden gemäß WO 98/40531 z.B. dazu benutzt, um Kunststoffflaschen, wie PET-Flaschen, in einen Behandlungsraum einzubringen, wo sie zur Verbesserung der Barriereeigenschaften beschichtet werden.'Damit jeder Behälter wahrend des Einbringens, beim Durchlauf im Schleusenrotor und beim Ausbringen nicht sich selbst überlassen, sondern stets korrekt positioniert bleibt (auch zum Schutz der Behälteroberfläche), und aus Gründen der Prozeßsicherheit, werden,kooperierende Klammern benutzt. Die Prozeßsicherheit ist ein extrem wichtiger Faktor, weil eine Störung durch eine fehlpositionierte oder freikommende Flasche das Anhalten der Vorrichtung, den Abbau des Unterdrucks und das Abschalten der Einrichtungen im Behandlungsraum erfordert, eine längere Stillstandszeit bedingt und dadurch hohe Kosten bedeutet. Gegebenenfalls müssen auch alle Behälter aus dem Behandlungsraum entfernt werden, ehe die Vorrichtung und die Behandlungsstation wieder in Gang setzbar sind. Obwohl eigentlich durch die Klammern die Prozeßsicherheit schon relativ hoch ist, ist nicht zu vermeiden, daß gerade bei einem Schleusenrotor mit beispielsweise mehr als zwanzig Schleusenkammern unter ungünstigen Umständen die Übergabe eines Behälters von einem Sternrad an den Schleusenrotor oder vom Schleusenrotor an ein Sternrad nicht klappt und ein Behälter in einer Schleusenkammer verbleibt, die zum Einbringen eines neuen Behälters leer sein muß. Dann kommt es unabwendbar zu einer Störung im Betriebsablauf.

Aus US-A-1 766 018 ist es ferner bekannt, bei einem Schleusenrotor-Paar mit jeweils nur sechs Schleusenkammern für im Vakuum zu verschließende Behälter in jedem Schleusenrotor diametral angeordnete Stößel vorzusehen. Jeder Stößel greift mit seinen Enden in zwei sich diametral gegenüberliegende Schleusenkammern ein und wird so betätigt (durch das Vakuum, einen eintretenden Behälter, oder einen Antrieb), daß er einen abzugebenden Behälter aus der Schleusenkammer ausschiebt. Wenn unter ungünstigen Umständen ein auszustoßender Behälter in seiner Schleusenkammer bleibt, kommt es zu einer außerordentlich schwierig zu behebenden Störung mit Beschädigungen, da keine Möglichkeit besteht, einen außerplanmäßig verbleibenden Behälter zu entfernen.

Der Erfindung liegt die Aufgabe zugrunde, eine Vorrichtung der eingangs genannten Art zu schaffen, bei der Betriebsstörungen aufgrund außerplanmäßig verbleibender Behälter zuverlässig vermieden werden.

Als Kern der Erfindung wird trotz der "sicheren" Zwangsübergabe und kontinuierlichen Positionierung der Behälter durch die Greif- und Halteeinrichtungen eine zusätzliche Einrichtung in die Vorrichtung gegliedert, die für den theoretisch zwar unwahrscheinlichen, praktisch jedoch nicht auszuschließenden Fall eines außerplanmäßig in einer Schleusenkammer verbleibenden Behälters diesen aus der Schleusenkammer entfernt, und zwar in Zusammenwirken mit dem bewußt vorgesehenen Ausstoßbereich, so daß nicht nur jeder verbleibende Behälter aus dem Schleusenrotor entfernbar, sondern auch so beseitigbar ist, daß er keine Betriebsstörung mehr hervorrufen kann. Die Mehrfachabsicherung in der Behälterförderung erhöht im Zusammenspiel mit den inneren und äußeren Ausstoßbereichen die Prozeßsicherheit erheblich, wobei dies mit baulich vertretbarem Aufwand erreichbar ist.

Grundsätzlich sind dabei zwei Varianten zweckmaßig. Das Ausstoßelement ist entweder außerhalb des Schleusenrotors und beim Ausstoßbereich positioniert und wird von außen her zum Eingriff in die Schleusenkammer gebracht, oder das Ausstoßelement ist innen im Schleusenrotor plaziert und wird von innen her in die Auswerfstellung in die Schleusenkammer verstellt. Im ersten Fall wird in jedem Ausstoßbereich nur mindestens ein Ausstoßelement benötigt. Im zweiten Fall wird für jede Schleusenkammer wenigstens ein Ausstoßelement benötigt.

Zweckmäßig ist das Ausstoßelement mit einer Verstelleinrichtung von den Sternrädern des Paares und dem Schleusenrotor getrennt im Ausstoßbereich angeordnet, derart, daß es zu keinen Kollisionen mit diesen Komponenten der Vorrichtung kommen kann.

Alternativ ist im Schleusenrotor für jede Schleusenkammer ein im Schleusenrotor verstellbar gelagertes Ausstoßelement vorgesehen. Zur Betätigung der Ausstoßelemente sind zwei bauliche Varianten zweckmäßig. Wenn jedem Ausstoßelement eine eigene, mit dem Schleusenrotor mitlaufende Verstelleinrichtung zugeordnet wird, ist zwar der bauliche Aufwand höher, jedoch der steuerungstechnische Aufwand gegebenenfalls geringer. Im anderen Fall ist in Zuordnung zu jedem Ausstoßbereich nur eine, dann allen Ausstoßelementen gemeinsam zugeordnete Verstelleinrichtung vorgesehen. Hierbei ist der bauliche Aufwand gering.

Eine baulich einfache, funktionssichere und platzsparende Ausführungsform verwendet den Schleusenkammern zugeordnete Stößel, die durch Federkraft in der Ruhestellung gehalten und dann in die Auswerfstellung verstellt werden, wenn sie bei einem Ausstoßbereich angelangt sind.

Zweckmäßigerweise wird jeder Stößel in einer Führung im Schleusenrotor linear verschiebbar geführt, wobei die Führung im Hinblick auf höheren oder niedrigeren Druck als Atmosphärendruck im Behandlungsraum druckdicht ausgelegt sein sollte.

Bei einer einfachen Ausführungsform besteht jede Verstelleinrichtung aus einer stationär gelagerten Kurvenbahn, die auf deh jeweiligen Ausstoßbereich ausgerichtet ist und an der die Stößel nacheinander anlaufen und in ihre Auswerfstellungen verstellt werden. Die Rückstellung der Stößel übernimmt die Federkraft. Zur Verschleißminderung könnten die Stößel mit Rollen, Kugeln oder Gleitkissen bestückt sein.

Eine besonders zweckmäßige Ausführungsform weist eine Verstelleinrichtung auf, die mit einem Sensor in Wirkverbindung steht, der im Fall eines außerplanmäßig verbliebenen Behälters die Verstelleinrichtung aktiviert, die mittels des Stößels den Behälter in den Ausstoßbereich befördert. Dazu wird ein Aktuator verwendet, zweckmäßigerweise ein Pneumatikzylinder, der durch ein Magnetventil gesteuert wird, und den Stößel entweder direkt oder bevorzugt über eine bewegliche Kurvenbahn in die Auswerfstellung stellt.

Da der Schleusenrotor mit beträchtlicher Geschwindigkeit rotiert, ist es zweckmäßig, den Sensor außerhalb des Schleusenrotors und voreilend zum oder am Beginn des Ausstoßbereiches zu plazieren. Um das Konzept des Schleusenrotors nicht nachhaltig modifizieren zu müssen, ist es zweckmäßig, die Verstelleinrichtung auf einer stationären Basisplatte anzubringen.

Bei einer einfachen Alternative ist das Ausstoßelement ein mitlaufender, verschwenkbar gelagerter Hebel, der mittels stationärer Kurvenbahnen oder Nockenflächen in die Auswerfstellung verstellt wird.

Damit ein außerplanmäßig verbliebener und zur Schadensabwehr ausgeworfener Behälter keine Folgeschäden hervorrufen kann, ist es zweckmäßig, im jeweiligen Ausstoßbereich einen Behältersammler oder Aussonderer vorzusehen.

Zweckmäßig ist jedes Ausstoßelement unterhalb der Greif- und Halteeinrichtungen angeordnet, und zwar in einer Höhenlage, in der ein rasches und zuverlässiges Auswerfen gewährleistet ist.

Um auch bei einem schnellaufenden Schleusenrotor zum Auswerfen eines außerplanmäßig verbliebenen Behälters genügend Zeit zu haben, ist es vorteilhaft, die Sternräder des jeweiligen Paares in Umfangsrichtung des Schleusenrotors weiter voneinander zu beabstanden, als es normal üblich ist.

Anhand der Zeichnung werden Ausführungsformen des Erfindungsgegenstandes erläutert. Es zeigen:
- Fig. 1: eine Draufsicht, teilweise im Schnitt einer Vorrichtung zum fortlaufenden Einbringen und Ausbringen von Behältern in einen bzw. aus einem Behandlungsraum,
- Fig. 2: eine Schnittansicht einer geänderten Ausführungsform in der Schnittebene A-B von Fig. 1,
- Fig. 3: einen Horizontalschnitt eines Schleusenrotors in einer weiter abgeänderten Ausführungsform, und
- Fig. 4: einen schematischen Vertikalschnitt des Schleusenrotors in der Ausführung von Fig. 3.

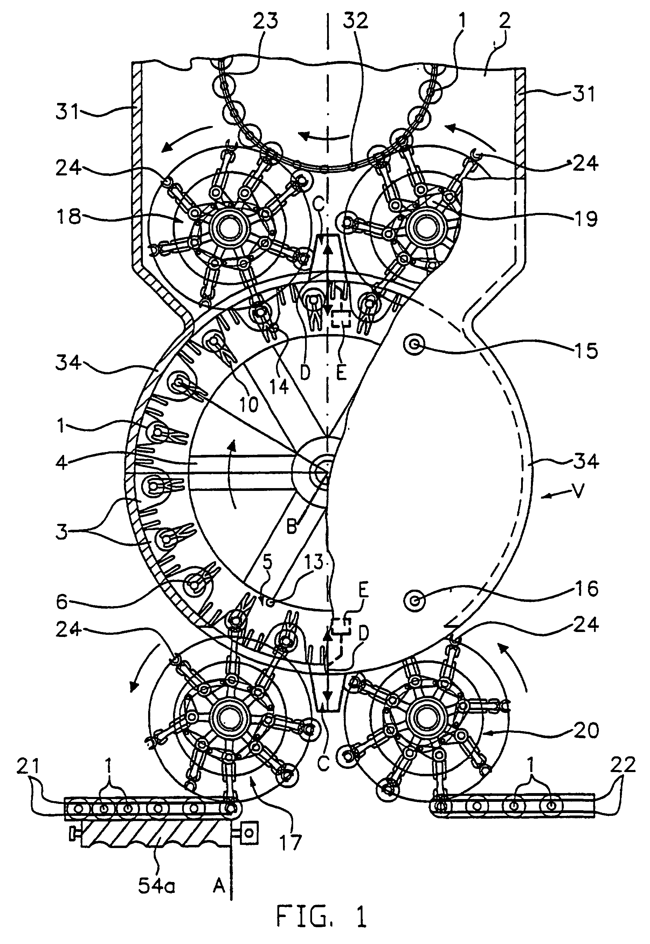

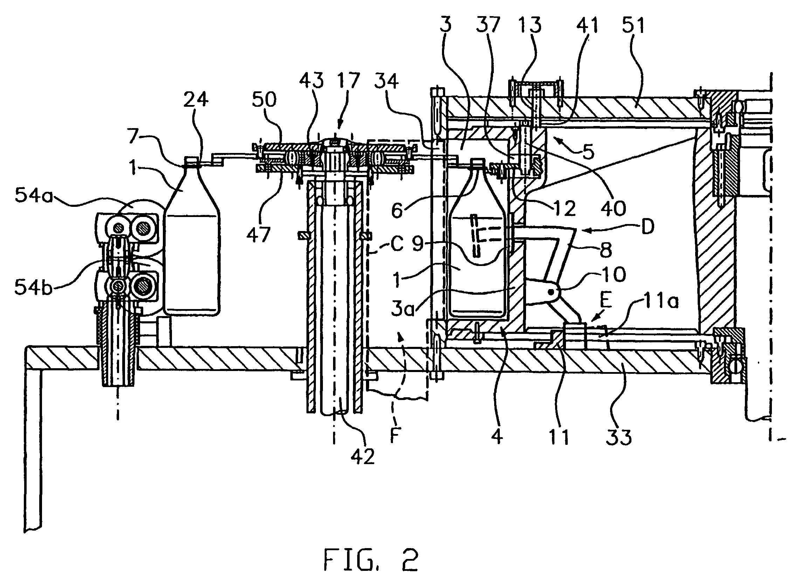

Eine Vorrichtung V in den Fig. 1 und 2 dient zum Einbringen und Ausbringen von Behältern 1, z. B. Kunststoffflaschen wie PET-Mehrwegflaschen, in einen bzw. aus einem beispielsweise evakuierten Behandlungsraum 2, in welchem die Behälter 1 beispielsweise zur Erhöhung ihrer Barriereeigenschaften beschichtet werden. Im durch Wände 31 abgeschlossenen Behandlungsraum 2 ist ein Förderer 23 mit in die Öffnungen der Behälter 1 einführbaren Dornen 32 enthalten, der die Behälter an nicht gezeigten Beschichtungseinrichtungen vorbeibewegt.

Die Vorrichtung V weist (Fig. 2) eine horizontale Grundplatte 33 auf, auf der ein Schleusenrotor 4 und zwei Paare mit dem Schleusenrotor 4 zusammenarbeitender Sternräder 17, 20; 18, 9 (bezüglich des Behandlungsraums 2 innere und äußere Sternradpaare) vorgesehen sind.

Das äußere Sternrad 17 übernimmt die Behälter 1 von einem Zuförderer 21, in dessen Endbereich Einlaufschnecken 54a, 54b vorgesehen sind. In diesem Endbereich werden klammerartige Greif- und Halteeinrichtungen 24 des Sternrades 17 auf die Behälter 1 aufgeschnappt. Anschließend wird jeder Behälter 1 in den Schleusenrotor 4 eingebracht und darin an eine gesteuerte, greiferartige Greif- und Halteeinrichtung 6 übergeben. Der Schleusenrotor 4 ist mit in seinem Außenumfang angeordneten, nach außen offenen Schleusenkammern 3 versehen, deren jede eine Greif- und Halteeinrichtung 6 enthält. Die Behälter 1 weisen beispielsweise (Fig. 2) einen Halskragen 7 und darüber ein Gewinde auf. Die klammerartigen Greif- und Halteeeinrichtungen 24 greifen oberhalb des Halskragens 7 an den Behältern 1 an, während die greiferartigen Greif- und Halteeinrichtungen 6 in den Schleusenkammern 3 unterhalb des Halskragens 7 angreifen. Dadurch ist eine problemlose Übergabe der Behälter sichergestellt.

Die Sternräder 17, 18, 19, 20 sind im wesentlichen baugleich und jeweils mit klammerartigen Greif- und Halteeinrichtungen 24 bestückt.

Die klammerartigen Greif- und Halteeinrichtungen 24 des im Behandlungsraum 2 angeordneten Sternrads 18 (des inneren Sternrades) übernehmen die Behälter von den greiferartigen Greif- und Halteeinrichtungen 6 in den Schleusenkammern 3 und übergeben die Behälter an die Dorne 23 des Förderers 32. Das andere, im Behandlungsraum 2 angeordnete Sternrad 19 (ebenfalls ein inneres Sternrad) übernimmt die behandelten Behälter 1 von den Dornen 23, und übergibt sie an die greiferartigen Greif- und Halteeinrichtungen 6 in den Schleusenkammern 3, mit denen die Behälter 1 zum äußeren Sternrad 20 gefördert und an dessen klammerartige Greif- und Halteeinrichtungen 24 übergeben werden.

Durch unterhalb der Grundplatte 33 angeordnete, nicht gezeigte Antriebsorgane werden der Schleusenrotor 4 und die Sternräder 17 bis 20 synchron zueinander sowie synchron zum Förderer 23 in Pfeilrichtung angetrieben. Die gasdicht verschlossenen Schleusenkammern 3 sind so dimensioniert, daß sie nur geringfügig größer als der größte zu fördernde Behälter 1 sind. Schleusenwände 34 gehen in die Wände 31 des Behandlungsraums 2 über. An der Oberseite ist eine Deckplatte 51 vorgesehen. Die Schleusenkammern 3 können im Bereich der Schleusenwände 34 mit Leitungen zur Gaszufuhr und/oder Gasabfuhr verbunden sein.

Mit der greiferartigen Greif- und Halteeinrichtung 6 in jeder Schleusenkammer 3 wird ein Behälter 1 während des Transports in dem Schleusenrotor 4 zentriert und fixiert, und zwar zweckmäßigerweise hängend ohne Bodenunterstützung und ohne Kontakt mit den Wänden 3a der Schleusenkammern. Jede Greif- und Halteeinrichtung 6 ist an einer Stützplatte 12 gelagert, die in einer Ausnehmung 37 der Schleusenkammer 3 lösbar und gasdicht befestigt ist. In der Halteposition umgreift die Greif- und Halteeinrichtung 6 den Hals des Behälters über mehr als 180° und mit Kraftschluß, so daß der Behälter 1 kraft- und formschlüssig gehalten wird. Die Steuerung der Öffnungs- und Schließbewegungen der Greif- und Halteeinrichtungen 6 erfolgt an den gewünschten Stellen der Umlaufbahn des Schleusenrotors 4 mit einer Steuereinrichtung, die beispielsweise auf in den Greif- und Halteeinrichtungen 6 vorgesehene Steuernocken 10 einwirkt. Jeder Steuernocken 10 ist an einer Steuerwelle 40 befestigt, die parallel zur Schleusenrotorachse drehbar gelagert ist und nach oben übersteht. Am überstehenden Ende ist ein Steuerhebel 41 befestigt, der jeweils mit einem von vier stationären, bolzenartigen Anschlägen 13, 14, 15, 16 zusammenarbeitet, die in der Deckplatte 51 befestigt sind und in die Umlaufbahn der Steuerhebel 41 ragen.

Da die Sternräder 17 bis 20 im wesentlichen baugleich sind, wird nur das Sternrad 17 erläutert. Auf einer senkrechten Antriebswelle 42 ist eine horizontale Platte 43 befestigt, an der Winkelhebel schwenkbar gelagert sind, die über Kurvenrollen mit einer unterhalb der Platte 43 stationär angeordneten Nutkurve 47 zusammenwirken, die eine Schwenkbewegung der klammerartigen Greif- und Halteeinrichtungen 24 während der Drehbewegung der Platte 43 steuert. An den Winkelhebeln angeordnete Schieber arbeiten über Kurvenrollen mit einer zweiten Nutkurve 50 zusammen, die oberhalb der Platte 43 stationär angeordnet ist und eine Radialbewegung der Greif- und Halteeinrichtungen 24 steuert. Die Greif- und Halteeinrichtungen 24 umgreifen den Behälter 1 über mehr als 180°, so daß bei der Förderung der Behälter 1 keine Bodenabstützung erforderlich ist. Während die greiferartigen Greif- und Halteeinrichtungen 6 durch ihre Steuereinrichtung 5 zwangsgesteuert werden, wird jede klammerartige Greif- und Halteeinrichtung 24 durch den Behälter 1 selbst geöffnet, in dem der Behälter die Greif- und Halteeinrichtung 24 bis zum Einschnappen auseinanderspreizt, eindringt, und dann durch Kraftschluß gehalten wird. Erst nach Ergreifen des Behälter 4 durch die greiferartige Greif- und Halteeinrichtung 6 in der Schleusenkammer 3 wird der Behälter 1 mit spürbarem Widerstand wieder abgegeben. Bei der Übergabe eines Behälters 1 von der Greif- und Halteeinrichtung 6 an die Greif- und Halteeinrichtung 24 des Sternrades 18 wird die Greif- und Halteeinrichtung 6 gesteuert geöffnet, sobald der Behälter 1 ordnungsgemäß in die Greif- und Halteeinrichtung 24 eingeschnappt ist. Die Greif- und Halteeinrichtung 24 des Sternrades 19 zieht den Behälter 1 vom Dorn 32 ab, sobald der Behälter ordnungsgemäß eingeschnappt ist, und übergibt diesen Behälter später an die Greif- und Halteeinrichtung 6, sobald sie gesteuert geschlossen wurde. Zur Übergabe des Behälters an eine Greif- und Halteeinrichtung 24 des Sternrades 20 wird die jeweilige Greif- und Halteeinrichtung 6 gesteuert geöffnet, sobald der Behälter ordnungsgemäß in die Greif- und Halteeinrichtung 24 eingeschnappt ist. Der Abförderer 22 zieht schließlich den Behälter 1 aus der Greif- und Halteeinrichtung 24 des Sternrades 20 ab.

Gemäß Fig. 1 ist zwischen jedem äußeren Sternradpaar 17, 20 und jedem inneren Sternradpaar 18, 19 ein Behälter-Ausstoßbereich C vorgesehen, wobei zweckmäßigerweise die beiden Sternräder jedes Paares in Umfangsrichtung des Schleusenrotors 4 weiter als normal voneinander beabstandet sind, um einen außerplanmäßig in einer Schleusenkammer 3 verbliebenen Behälter 1 zur Schadensabwehr ausstoßen und abfördern zu können. Zum Ausstoßen eines solchen Behälters ist ein mit einer Verstelleinrichtung E in Wirkverbindung stehendes Ausstoßelement D vorgesehen, das aus einer Ruhestellung, in der es nicht in die Schleusenkammern 3 eingreift, in eine Auswerfstellung in die Schleusenkammer 3 verstellbar ist.

In Fig. 1 ist das Ausstoßelement D nur schematisch durch einen Doppelpfeil angedeutet, wie auch die Verstelleinrichtung E.

Es ist gibt mehrere Möglichkeiten, die nur in den Ausstoßbereichen C aktivierten Ausstoßelemente D mit ihren Verstelleinrichtungen E wirkungsmäßig in die Vorrichtung V einzugliedern.

Im ersten Fall (ohne Darstellung) befindet sich das Ausstoßelement D mit seiner Verstelleinrichtung E außerhalb des Schleusenrotors 4 im oder beim Ausstoßbereich C, wobei es durch die Verstelleinrichtung E so antreibbar ist, daß es aus der Ruhestellung außerhalb der Schleusenkammer in eine Auswerfstellung in die Schleusenkammer einbringbar ist und einen dort verbliebenen Behälter 1 in den Ausstoßbereich C befördert.

Im anderen Fall (Fig. 2 bis 4) ist jeder Schleusenkammer 3 wenigstens ein eigenes Ausstoßelement D zugeordnet, das entweder jedesmal in die Auswerfstellung verstellt wird, wenn die zugehörige Schleusenkammer 3 in den Ausstoßbereich C eintritt, oder nur dann, wenn außerplanmäßig ein Behälter 1 in der Schleusenkammer 3 verblieben ist, der eigentlich von der Greif- und Halteeinrichtung 24 aus der Schleusenkammer 3 entnommen sein müßte.

Bei einer nicht dargestellten Ausführungsform könnte jedes Ausstoßelement D einer Schleusenkammer 3 mit einer eigenen Verstelleinrichtung zusammenarbeiten, die wie das Ausstoßelement D mit dem Schleusenrotor 4 umläuft.

Der Vorzug ist jedoch einer Ausführungsform zu geben (Fig. 2 bis 4), bei der für jeden Ausstoßbereich C nur eine allen Ausstoßelementen D gemeinsame Verstelleinrichtung E vorgesehen ist, und zwar stationär innerhalb des Schleusenrotors 4 auf der Grundplatte 33 (oder gegebenenfalls an der Deckplatte 51). Jede Verstelleinrichtung E ist in etwa auf die Winkelposition des zugehörigen Ausstoßbereiches C ausgerichtet.

In Fig. 2 ist das Ausstoßelement D ein Schwenkhebel 8, der in einem Schwenklager S an einer Schleusenkammerwand 3a gelagert ist und mit einer Ausstoßplatte 9 in die Schleusenkammer 2 greift. Das andere, freie Betätigungsende des Hebels 8 arbeitet mit einer an der Grundplatte 33 stationär befestigten Führungsbahn oder Nockenfläche 11 zusammen. Die Führungsbahn bzw. Nockenfläche 11 besitzt einen Abschnitt 11a, der den durch eine nicht gezeigte Feder in die in ausgezogenen Linien gezeigte Ruhestellung gebrachten Hebel 8 in die gestrichelt angedeutete Auswerfstellung verstellt, und zwar dann, wenn die zugeordnete Schleusenkammer 3 in den Ausstoßbereich C einzudringen beginnt. Im übrigen kann im Ausstoßbereich C ein Behältersammler oder Behälteraussortierer F vorgesehen sein.

Bei der Umlaufbewegung des Schleusenrotors 4 wird demzufolge jeder Hebel 8 zweimal vorsorglich aus der Ruhestellung in die gestrichelte Auswerfstellung verstellt, unabhängig davon, ob in der Schleusenkammer 2 ein außerplanmäßig verbliebener Behälter 1 enthalten ist, oder nicht.

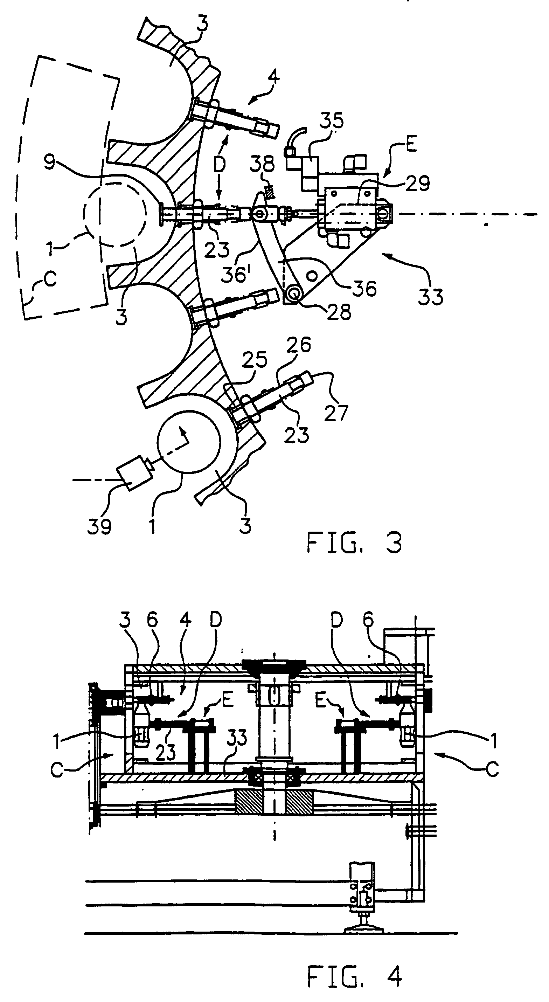

In der'Ausführungsform in Fig. 3 sind die den Schleusenkammern 3 zugehörigen Ausstoßelemente D als linear beweglich geführte Stößel 23 ausgebildet, deren jeder in einer zweckmäßigerweise gasdichten Führung 25 in der Schleusenkammerwand 3a geführt wird. Eine Feder 26 sorgt für die zurückgezogene Ruhestellung des Stößels 23, der mit seinem Betätigungsende 27 auf eine an der Grundplatte 33 gelagerte Kurvenbahn 36, 36' ausgerichtet ist, deren Position mit dem Ausstoßbereieh C korrespondiert.

Analog zur permanent betätigten Ausführungsform in Fig. 2 kann die Kurvenbahn 36' beispielsweise bei 28 und 38 so abgestützt sein, daß jeder Stößel 23 beim Passieren der Kurvenbahn 36' vorsorglich in die gezeigte Ausstoßstellung verstellt wird und dann einen außerplanmäßig verbliebenen Behälter 1 (gestrichelt gezeigt) in den Ausstoßbereich C befördert.

Bei der zweiten, in Fig. 3 gezeigten Variante wird der einer Schleusenkammer 3 zugeordnete Stößel 23 nur dann aus der Ruhestellung gegen die Kraft der Feder 26 in die Auswerfstellung verstellt, wenn sich tatsächlich ein außerplanmäßig verbliebener Behälter 1 in der Schleusenkammer 3 befindet. Zu diesem Zweck ist die Verstelleinrichtung E mit einem Aktuator 29 ausgestattet, der die Kurvenbahn 36 um die als Schwenkachse ausgelegte Abstützung 28 in die in ausgezogenen Linien gezeichnete Lage verstellt. Die Abstützung 38 ist dann nicht vorhanden. Der Aktuator 29 ist beispielsweise ein Pneumatikzylinder, der über ein Magnetventil 35 mit Druckluft versorgt wird und sich unter Federkraft rückstellt, sobald die Druckluftbeaufschlagung abgebrochen worden ist. Außerhalb des Schleusenrotors 4 ist, in Umlaufrichtung voreilend zum oder am Beginn des Ausstoßbereiches C, ein Sensor 39 positioniert, der die passierenden Schleusenkammern nacheinander auf Vorhandensein eines außerplanmäßig verbliebenen Behälters 1 abtastet. Stellt der Sensor 39 an seiner Position den in ausgezogenen Linien gezeichneten Behälter 1 in der Schleusenkammer 3 fest, dann wird über eine Verknüpfung zwischen dem Sensor 39 und dem Magnetventil 35 der Aktuator 29 aktiviert, der die Kurvenbahn 36 in die in ausgezogenen Linien gezeigte Stellung bringt, so daß dieser Behälter 1 dann (gestrichelt angedeutet) in den Ausstoßbereich C befördert wird.

Fig. 4 zeigt im Achsschnitt des Schleusenrotors 4 die Anordnung der Ausstoßelemente D, beispielsweise der Stößel 23 von Fig. 3, und ihrer Verstelleinrichtungen E, die über Konsolen auf der Grundplatte 33 festgelegt sind. Die Ausstoßelemente D befinden sich unterhalb der Greif- und Halteeinrichtungen 6 der Schleusenkammern 3 und in einer Höhenlage, in der sie die Behälter 1 zügig und im wesentlichen parallel zu sich selbst aus den Schleusenkammern 3 in den jeweiligen Ausstoßbereich C befördern. Die greiferartigen Greif- und Halteelemente 6 des Schleusenrotors 4 werden normalerweise durch den stationären Anschlag 16 bzw. 14 geöffnet, so daß sie den Ausstoß der Behälter im Ausstoßbereich C nicht behindern.

Der Sensor 30 kann auch am Sternrad 18 bzw. 20 angeordnet sein, wobei er dann beim Erkennen eines leeren klammerartigen Greif- und Halteelements 24 den Aktuator zwecks Ausstoß der die Leerstelle verursachenden, nicht ergriffenen Flasche 1 aktiviert.

## Patentansprüche

1. Vorrichtung (V) zum fortlaufenden Einbringen und/oder Ausbringen von Behältern (1), insbesondere Kunststoffflaschen, in einen oder aus einem Behandlungsraum (2), mit wenigstens einem drehantreibbaren, am Außenumfang nach außen offene Schleusenkammern (3) aufweisenden Schleusenrotor (4), mit mindestens einem am Außenumfang des Schleusenrotors plazierten, mitlaufenden Sternradpaar (17, 20; 18, 19), dessen Sternräder in Umfangsrichtung des Schleusenrotors beabstandet sind, und mit in den Schleusenkammern (3) und an den Sternrädern (17, 18, 19, 20) angeordneten, zur Behälterübergabe miteinander kooperierenden Greif- und Halteeinrichtungen (6, 24) für die Behälter, **dadurch gekennzeichnet, daß** am Außenumfang des Schleusenrotors (4) zwischen den Sternrädern (17, 20; 18, 19) mindestens eines Paares ein Behälter-Ausstoßbereich (C) und für jeden Ausstoßbereich (C) wenigstens ein aus einer Ruhestellung in eine Behälter-Auswerfstellung in die Schleusenkammer (3) verstellbares Ausstoßelement (D) vorgesehen sind.

2. Vorrichtung nach Anspruch 1, **dadurch gekennzeichnet, daß** das jeweilige Ausstoßelement (D) entweder vom Inneren des Schleusenrotors (4) oder von der Außenseite des Schleusenrotors (4) her in die an einem in der Schleusenkammer (3) befindlichen Behälter (1) angreifende Behälter-Auswerfstellung bewegbar ist.

3. Vorrichtung nach Anspruch 1, **dadurch gekennzeichnet, daß** das Ausstoßelement (D) mit einer Verstelleinrichtung (E) von den Sternrädern (17, 18, 19, 20) und dem Schleusenrotor (4) getrennt im Ausstoßbereich (C) angeordnet ist.

4. Vorrichtung nach Anspruch 1, **dadurch gekennzeichnet, daß** jeder Schleusenkammer (3) ein im Schleusenrotor (4) mitlaufendes und verstellbar gelagertes Ausstoßelement (D) zugeordnet ist, und daß im Schleusenrotor (4) entweder für jedes Ausstoßelement (D) eine eigene mitlaufende Verstelleinrichtung (E) oder für alle Ausstoßelemente (D) jeweils eine stationäre und auf einen Ausstoßbereich (C) ausgerichtete Verstelleinrichtung (E) vorgesehen ist.

5. Vorrichtung nach Anspruch 4, **dadurch gekennzeichnet, daß** das der jeweiligen Schleusenkammer (3) zugeordnete Ausstoßelement (D) ein durch Federkraft (26) in Ruhestellung beaufschlagter, in etwa zur Schleusenrotorachse radialer Stößel (23) ist.

6. Vorrichtung nach Anspruch 5, **dadurch gekennzeichnet, daß** der Stößel (23) in einer Führung (25) im Schleusenrotor (4), vorzugsweise in einer Schleusenkammer-Begrenzungswand (3a), linear verschieblich geführt ist.

7. Vorrichtung nach Anspruch 4, **dadurch gekennzeichnet, daß** die Verstelleinrichtung (E) eine stationär gelagerte, in die Umlaufbahn der freien Enden aller in ihren Ruhestellungen befindlichen Stößel (23) eingreifende Kurvenbahn (36') aufweist.

8. Vorrichtung nach Anspruch 3, **dadurch gekennzeichnet, daß** die Verstelleinrichtung (E) eine aus einer Passivstellung in eine Eingriffsstellung am freien Ende eines Stößels (23) verstellbare Kurvenbahn (36) und einen Aktuator (29), vorzugsweise einen mittels eines Magnetventils (35) steuerbaren Pneumatikzylinder, aufweist, und daß der Aktuator (29) mit einem Sensor (39) in Wirkverbindung steht.

9. Vorrichtung nach Anspruch 8, **dadurch gekennzeichnet, daß** der Sensor (39) außerhalb des Schleusenrotors (4), vorzugsweise in Rotordrehrichtung voreilend zur Winkelposition der Kurvenbahn (36), im oder angrenzend an den Ausstoßbereich (C) angeordnet ist und mit ihm jede Schleusenkammer (3) auf Vorhandensein eines Behälters (1) abtastbar ist.

10. Vorrichtung nach Anspruch 8, **dadurch gekennzeichnet, daß** der Sensor (39) außerhalb des Schleusenrotors (4) an einem die Behälter (1) von diesem übernehmenden Sternrad (18, 20) angeordnet ist und mit ihm jede Greif- und Halteeinrichtung (24) des Sternrads (18, 20) auf das Fehlen eines Behälters (1) abtastbar ist.

11. Vorrichtung nach wenigstens einem der vorhergehenden Ansprüche, **dadurch gekennzeichnet, daß** jede Verstelleinrichtung (E) auf einer stationären Basisplatte (33) des Schleusenrotors (4) gelagert ist.

12. Vorrichtung nach Anspruch 1, **dadurch gekennzeichnet, daß** das Ausstoßelement (D) ein im Schleusenrotor (4) mitlaufender, schwenkbar gelagerter Hebel (8), vorzugsweise ein gekröpfter Hebel mit einer in der Schleusenkammer (3) angeordneten Ausstoßplatte (9), ist, der mit einem Betätigungsende auf stationär gelagerte Kurvenbahnen (11, 11a) oder Nockenflächen ausgerichtet ist, die ihrerseits im Inneren des Schleusenrotors (4) auf die Ausstoßbereiche (C) ausgerichtet sind.

13. Vorrichtung nach Anspruch 1, **dadurch gekennzeichnet, daß** in jedem Ausstoßbereich (C) ein Behältersammler oder Behälteraussonderer (F) vorgesehen ist.

14. Vorrichtung nach Anspruch 1, **dadurch gekennzeichnet, daß** jedes Ausstoßelement (D) im Schleusenrotor (4) nahe unterhalb der Greif- und Halteeinrichtungen (6, 24) angeordnet ist.

15. Vorrichtung nach Anspruch 1, **dadurch gekennzeichnet, daß** die in Umfangsrichtung des Schleusenrotors (4) gesehene Erstreckung jedes Ausstoßbereiches (C) ein Mehrfaches der Schleusenkammerweite beträgt.

16. Vorrichtung nach wenigstens einem der vorhergehenden Ansprüche , **dadurch gekennzeichnet, daß** im Behandlungsraum (2) ein Unterdruck besteht und in diesem ein Behälter-Ausstoßbereich (C) angeordnet ist, wobei die ausgestoßenen Behälter (1) zumindest vorübergehend im Unterdruck-Behandlungsraum (2) verbleiben.

## Claims

1. Apparatus (V) for continuously feeding containers (1), more particularly plastics bottles, into and/or out of a treatment area (2), having at least one rotary-driven, lock rotor (4) incorporating outward-opening lock chambers (3) on its outer circumference, having at least one pair of star wheels (17, 20: 18, 19) positioned on the outer circumference of the lock rotor and co-rotating therewith, the star wheels of which are spaced apart in the circumferential direction of the lock rotor, and having container gripping and holding devices (6, 24) arranged in the lock chambers (3) and on the star wheels (17, 18, 19, 20) and cooperating with one another for the transfer of the containers,
**characterised in that** on the outer circumference of the lock rotor (4), between the star wheels (17, 20; 18, 29) of at least one pair, there are provided a container ejection zone (C) and for each container ejection zone (C) at least one ejector (D) adapted to be adjusted from a rest position into a position in which containers are ejected into the lock chamber (3).

2. Apparatus according to claim 1, **characterised in that** the respective ejector (D) can be moved either from the inside of the lock rotor (4) or from the outside of the lock rotor (4) into the container ejecting position acting upon a container situated in the lock chamber (3).

3. Apparatus according to claim 1, **characterised in that** the ejector (D) is arranged in the ejection zone (C) with an adjusting device (E) separately from the star wheels (17, 18, 19, 20) and the lock rotor (4).

4. Apparatus according to claim 1, **characterised in that** operatively associated with each lock chamber (3) is an ejector (D) which co-rotates in the lock rotor (4) and is adjustably mounted, and that in the lock rotor (4) either each ejector (D) has its own co-rotating adjusting device (E) or for each of the ejectors (D) a respective stationary adjusting device (E) is provided which is aligned with one ejection zone (C).

5. Machine according to claim 4, **characterised in that** the ejector (D) which is operatively associated with the respective lock chamber (3) is a ram (23) which is acted upon by the force of a spring (26) in the rest position and is more or less radial to the axis of the lock rotor.

6. Machine according to claim 5, **characterised in that** the ram (23) is set so as to be linearly displaceable in a guide (25) in the lock rotor (4), preferably in one boundary wall (3a) of the lock chamber.

7. Machine according to claim 4, **characterised in that** the adjusting device (E) has a fixedly mounted cam track (36') which engages in the circumferential path of the free ends of all the rams (23) when the latter are in their rest positions.

8. Machine according to claim 3, **characterised in that** the adjusting device (E) has a cam track (36), which can be adjusted from a passive setting into an engagement setting on the free end of a ram (23), and an actuator (29), preferably a pneumatic cylinder controllable by means of a solenoid valve (35), and that the actuator (29) is operatively connected to a sensor (39).

9. Machine according to claim 8, **characterised in that** the sensor (39) is arranged outside the lock rotor (4), preferably travelling in advance of the angular position of the cam track (36) in the rotor's direction of rotation, in or contiguous with the ejection zone (C), and with the sensor (39) each lock chamber (3) can be scanned for the presence of a container (1).

10. Machine according to claim 8, **characterised in that** the sensor (39) is arranged outside the lock rotor (4) on a star wheel (18, 20) which receives the containers (1) therefrom and with the sensor (39) each gripping and holding device (24) on the star wheel (18, 20) can be scanned for the absence of a container (1).

11. Machine according to at least one of the preceding claims, **characterised in that** each adjusting device (E) is mounted on a stationary baseplate (33) of the lock rotor (4).

12. Machine according to claim 1, **characterised in that** the ejector (D) is a swivel-mounted lever (8) which co-rotates in the lock rotor (4), preferably a cranked lever with an ejector plate (9) disposed in the lock chamber (3), said lever having one actuating end aligned with fixedly mounted cam tracks (11, 11a) or cam surfaces which in turn are aligned inside the lock rotor (4) with the ejection zones (C).

13. Machine according to claim 1, **characterised in that** provided in each ejection zone (C) is a container collector or container sorter (F).

14. Machine according to claim 1, **characterised in that** each ejector (D) is arranged in the lock rotor (4), just beneath the gripping and holding devices (6, 24).

15. Machine according to claim 1, **characterised in that**, viewed in the circumferential direction of the lock rotor (4), the amount by which each ejection zone (C) extends is a multiple of the width of the lock chamber.

16. Machine according to at least one of the preceding claims, **characterised in that** there is a vacuum in the treatment area (2) and a container ejection zone (C) is disposed therein, the ejected containers (1) remaining at least temporarily in the vacuum treatment area (2).

## Revendications

1. Dispositif (V) pour faire entrer et/ou sortir en continu des récipients (1), en particulier des bouteilles en matière plastique, dans un ou plusieurs espaces de traitement (2), comportant au moins un rotor de sas (4) qui peut être entraîné en rotation et qui présente sur le pourtour extérieur des chambres de sas (3) ouvertes vers l'extérieur, comportant au moins une paire de roues en étoile (17, 20 ; 18, 19), entraînées et placées sur le pourtour extérieur du rotor de sas, dont les roues en étoile sont écartées en direction du pourtour du rotor de sas et comportant des installations de saisie et de maintien (6, 24), disposées dans les chambres de sas (3) et contre les roues en étoile (17, 18, 19, 20), qui fonctionnent conjointement pour transmettre les récipients,
**caractérisé en ce que**
sur le pourtour extérieur du rotor de sas (4) entre les roues en étoile (17, 20 ; 18, 19) d'au moins une paire, on prévoit une zone d'éjection (C) des récipients et pour chaque zone d'éjection (C) un élément d'éjection (D) déplaçable dans la chambre de sas (3) depuis une position de repos jusque dans une position d'expulsion du récipient.

2. Dispositif selon la revendication 1,
**caractérisé en ce que**
chaque élément d'éjection (D) est mobile, soit depuis l'intérieur du rotor de sas (4), soit à partir du côté extérieur du rotor de sas (4) dans la position d'expulsion de récipient qui saisit un récipient (1) situé dans la chambre de sas (3).

3. Dispositif selon la revendication 1,
**caractérisé en ce que**
l'élément d'éjection (D) muni d'une installation de déplacement (E) est disposé dans la zone d'éjection (C) en étant séparé des roues en étoile (17, 18, 19, 20) et du rotor de sas (4).

4. Dispositif selon la revendication 1,
**caractérisé en ce qu'**
un élément d'éjection (D), entraîné dans le rotor de sas (4) et monté de façon à pouvoir se déplacer, est associé à chaque chambre de sas (3) et on prévoit dans le rotor de sas (4), soit pour chaque élément d'éjection (D) une installation de déplacement (E) entraînée individuelle, soit pour tous les éléments d'éjection (D) à chaque fois une installation de déplacement (E) stationnaire et dirigée vers une zone d'éjection (C).

5. Dispositif selon la revendication 4,
**caractérisé en ce que**
l'élément d'éjection (D) associé à la chambre de sas (3) concernée est un poussoir (23), approximativement radial par rapport à l'axe du rotor de sas, et soumis à une force élastique (26) lorsqu'il est en position de repos.

6. Dispositif selon la revendication 5,
**caractérisé en ce que**
le poussoir (23) est guidé de façon à se déplacer linéairement dans un guidage (25) situé dans le rotor de sas (4), de préférence dans une paroi de délimitation de la chambre de sas (3a).

7. Dispositif selon la revendication 4,
**caractérisé en ce que**
l'installation de déplacement (E) présente une voie courbe (36'), montée de façon stationnaire, qui a prise dans la voie tournante des extrémités libres de tous les poussoirs (23) qui se trouvent en position de repos.

8. Dispositif selon la revendication 3,
**caractérisé en ce que**
l'installation de déplacement (E) présente une voie courbe (36) déplaçable à l'extrémité libre d'un poussoir (23) depuis une position passive jusqu'à une position de saisie et un vérin (29), de préférence un vérin pneumatique réglable à l'aide d'une vanne magnétique (35), le vérin (29) étant en liaison active avec un capteur (39).

9. Dispositif selon la revendication 8,
**caractérisé en ce que**
le capteur (39) est disposé à l'extérieur du rotor de sas (4), de préférence dans le sens de rotation du rotor en avant de la position angulaire de la voie courbe (36), dans la zone d'éjection (C) ou dans son voisinage et il permet d'explorer chaque chambre de sas (3) pour établir la présence d'un récipient (1).

10. Dispositif selon la revendication 8,
**caractérisé en ce que**
le capteur (39) est disposé à l'extérieur du rotor de sas (4) contre une roue en étoile (18, 20) qui y prend les récipients (1) et il permet d'explorer chaque installation de saisie et de maintien (24) de la roue en étoile (18, 20) pour établir l'absence d'un récipient (1).

11. Dispositif selon au moins l'une des revendications précédentes,
**caractérisé en ce que**
chaque installation de déplacement (E) est montée sur une plaque de base (33) stationnaire du rotor de sas (4).

12. Dispositif selon la revendication 1,
**caractérisé en ce que**
l'élément d'éjection (D) est un levier (8) entraîné dans le rotor de sas (4) et monté de façon à pouvoir pivoter, de préférence un levier coudé comportant une plaque d'éjection (9) disposée dans la chambre de sas (3) ; par une extrémité d'actionnement le levier est orienté vers des voies courbes (11, 11a) ou vers des surfaces de came montées de façon stationnaire qui sont quant à elles orientées vers les zones d'éjection (C) à l'intérieur du rotor de sas (4).

13. Dispositif selon la revendication 1,
**caractérisé en ce qu'**
on prévoit dans chaque zone d'éjection (C) un collecteur de récipient ou un trieur de récipient (F).

14. Dispositif selon la revendication 1,
**caractérisé en ce que**
chaque élément d'éjection (D) est disposé dans le rotor de sas (4) juste au-dessous des installations de saisie et de maintien (6, 24).

15. Dispositif selon la revendication 1,
**caractérisé en ce que**
vue en direction périphérique du rotor de sas (4), l'étendue de chaque zone d'éjection (C) est un multiple de la largeur de la chambre de sas.

16. Dispositif selon au moins l'une des revendications précédentes,
**caractérisé en ce qu'**
il y a dans l'espace de traitement (2) une dépression dans laquelle est placée une zone d'éjection (C) de récipient, les récipients éjectés restant au moins momentanément dans l'espace de traitement (2) sous dépression.
